# EUROPEAN PATENT SPECIFICATION

(11) **EP 2 762 412 B1**
(45) Date of publication and mention of the grant of the patent: **22.03.2017**
(21) Application number: 13153983.5
(22) Date of filing: 05.02.2013
(51) Int. Cl.: B65B 55/02, A23L 3/40, B65B 55/18

(54) **Method of producing a packed food product**
Verfahren zur Herstellung eines verpackten Lebensmittelprodukts
Procédé de production d'un produit alimentaire emballé

(43) Date of publication of application: 06.08.2014
(60) Divisional application: 16184525.0
(73) Proprietor: Mars Incorporated, McLean, Virginia 22101-3883 (US)
(72) Inventor: Schmidt Siegfried, 27283 Verden (DE)
(74) Representative: Scholz, Volker

(56) References cited:
- DE-A1-102007 037 606
- US-A1- 2011 030 237

## Description

The invention relates to a method of producing a packed food product, in which a food product is cooked, dried and packaged in an atmosphere of superheated steam, and also to a packaged food product produced using the method.

A method of this kind is known from, for example, DE 102 007 037 606 Al, the food product being conventionally dried as a rule down to an a_{w} value (active water content) of about 0.60 or 0.65. The reason for such relatively extensive drying is that it has so far always been assumed that if the a_{w} values were higher, uncontrolled growth of any microorganisms remaining in the product, such as bacteria, fungi, yeasts etc., would be unavoidable if the product were not subsequently sterilised.

More recent systematic studies on the growth of different categories of microorganisms have, however, shown that substantially less extensive drying of moist starting products may still be sufficient, under certain circumstances, to obtain packaged products with satisfactory long-term storage stability. When a food product is dried in an atmosphere of superheated steam containing less than 3 % O₂ and at a temperature of at least 120° C to an a_{w} value of only 0.92 at most, preferably no more than 0.90, microorganisms are already killed off to a considerable extent, and it has been found that while some spores may be able to survive the drying process, they are nevertheless unable to grow any further at a_{w} values of no more than 0.94, especially less than 0.92, 0.90 or 0.86, provided the product is hermetically packaged while it is still in the atmosphere of superheated steam with an oxygen content of no more than 3 % by volume.

On the other hand, whereas certain microorganisms such as moulds and yeasts may still exhibit growth at a_{w} values of 0.80 and more, in some cases even 0.60 and more, they are killed in the course of drying the product in the atmosphere of superheated steam and therefore are likewise no longer relevant in the finished packed product.

The object of the invention is thus achieved by a method of producing a packed food product in accordance with claim 1.

Advantageous embodiments of the invention are described in the dependent claims.

The invention also relates to a food product which is packed in a package that is impermeable to oxygen in accordance with claim 13. Advantageous further developments of the invention are described in the other dependent claims.

The invention will now be explained by describing worked embodiments, reference being made to a drawing, in which
Fig. 1 schematically shows an apparatus for carrying out the method of the invention in accordance with a first embodiment, and
Fig. 2 shows a variant of the apparatus according to Fig. 1.

The key parameters of the production method of the invention are cooking at at least 100° C, introducing the cooked food product into an atmosphere of superheated steam or an atmosphere of superheated steam consisting of water vapour and residual air and containing less than 3 % oxygen and having a temperature of at least 120° C, and drying the product in the atmosphere of superheated steam to an a_{w} value ranging from 0.90 to 0.92, and packaging the product within the atmosphere of superheated steam.

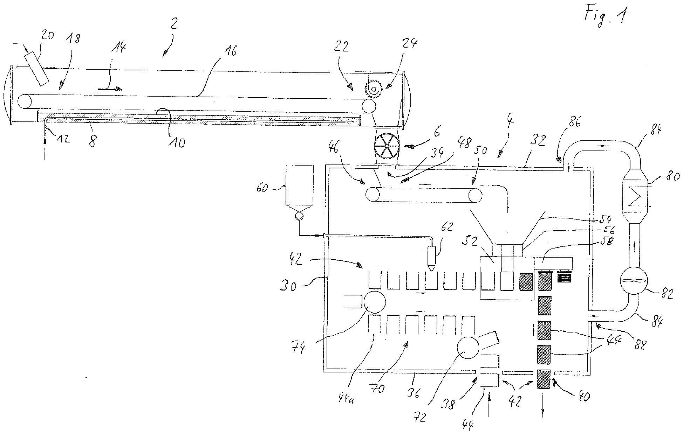

Fig. 1 shows an apparatus which is suitable for carrying out such a method, where the apparatus consists of a cooking apparatus 2 and a drying and packaging apparatus 4, which communicate with one another by means of a lock 6.

In the example illustrated, the cooking apparatus 2 takes the form of a cooking tube, within which an atmosphere of saturated steam at atmospheric pressure or at an overpressure is created. In the cooking tube, there is a water supply 8 with a free surface 10, which is heated by a heating apparatus 12, in this case a steam line. Above the free surface 10 of the water supply 8, there is a conveyor belt 16 that can be driven in a transport direction 14, with a receiving end 18 above which is disposed a delivery means 20 for a food product to be cooked, and a discharge end 22 located above the lock 6 and above which there may be a processing apparatus 24 for cooked food product, such as a cutting apparatus for example.

In operation, the cooking apparatus 2 can be controlled such that inside the cooking apparatus 2, an atmosphere can be generated that is largely or virtually completely free of air and oxygen, at a temperature of at least 100° C. A conveying speed of the conveyor belt 16 can be adjusted such that the food product requires a predetermined dwell time on the conveyor belt for its transportation from the receiving end 18 to the discharge end 22, during which it is cooked in the steam atmosphere. Depending on the nature and greatest cross-sectional area of the product to be cooked, the dwell time can be at least 10 seconds, 30 seconds, 1 minute or 2 minutes, and it can be up to 1 minute, 2 minutes, 3 minutes or 5 minutes.

The drying and packaging apparatus 4 has a housing 30, which is closed on all sides and on the top side 32 of which an opening 34 is provided for connecting the lock 6.

On an underside 36 of the housing 30, there are an entry port 38 and an exit port 40 for the entry and exit of a container conveying means 42. The container conveying means 42 conveys a continuous series of containers 44 (pouches, jars, cans ...) into and out of the housing 30.

Above the container conveying means 42 there is a delivery belt 46, with a receiving end 48 beneath the lock 6 and a discharge end 50 above a filling apparatus 52.

The delivery belt 46 serves for the purpose of drying and acting as a buffer and storage location for cooked product delivered via the lock 6 before it reaches the filling apparatus 52. In addition, a funnel-shaped buffer 54 can be provided above the filling apparatus 52.

The delivery belt 46 is controlled in such a way that a particular dwell time (minimum dwell time and/or maximum dwell time) of the cooked products in the atmosphere of superheated steam inside the housing 30 is ensured, such as at least 10 seconds, 20 seconds, 30 seconds, 40 seconds, 50 seconds, 1 minute, 2 minutes, 3 minutes, 5 minutes or even 10 minutes. It may also be contemplated that the cooked food product is pasteurised during a predetermined dwell time, such as over at least 3 minutes, 5 minutes, or 10 minutes.

The filling apparatus 52 has a filler with metering means 56 and a lid sealer 58 in order to fill individual containers 44 one after the other with metered amounts and then to seal them. Sealing is performed hermetically, i.e. so that the sealed containers 44 are sealed so as to be impermeable to oxygen.

Upstream or downstream of the filling apparatus 52, there may be at least one further delivery means, for example for flowable ingredients such as gravy, a container 60 and a metering means 62 for gravy being illustrated, or for chunky or granular ingredients.

In addition, an apparatus for introducing an inert protective gas such as CO₂ or N₂ into the container 44 may be provided upstream of the lid sealer 58, in order to fill any part of the volume inside a container 44 which is not taken up by food product with a protective gas before the container 44 is sealed.

After entering the housing 30, the containers 44 pass through a conveying region 70, in which they adopt a reversed position, in which a container opening 44a points downwards vertically or at least at an angle, so that any ambient air in the containers 44 can be automatically replaced by the atmosphere of superheated steam inside the housing 30. For this purpose, a first redirecting means 72 is provided for redirecting the container conveying means 42, especially about a horizontal axis running transversely to the direction of transport, after which the container openings 44a point downwards at an angle or vertically. After the conveying region 70, the containers are moved to a filling position, in which the container openings 44a are pointing upwards at an angle or vertically, for example by means of a second redirecting means 74.

After being filled and sealed, the containers 44 preferably remain in their filling position, as is illustrated in Fig. 1. For this purpose, it may be contemplated that the containers 44 are kept adjustable relative to the container conveying means 42 or pivotable about a horizontal axis running transversely to the direction of transport of the container conveying means 42, in order to ensure that the containers 44 continue to adopt their filling position downstream of a corresponding redirection of the container conveying means 42, which is not shown in Fig. 1.

Inside the housing 30, an atmosphere of superheated steam is provided, which contains water vapour and less than 3 % oxygen and has a temperature of at least 120° C. In order to maintain these conditions, a heat exchanger 80 and a fan 82 are provided, which are connected to the housing 30 via a steam line 84. An outlet end 86 of the steam line 84 is preferably located at the top side 32 of the housing, while an inlet end 88 is located in a region close to the underside 36 of the housing. The inlet end 88 is preferably located beneath a middle of a housing height H (vertical distance between the opening 34 and an entry or exit port 38, 40), roughly between 10 and 30 % ofH.

In addition, there may be a steam supply line present (not shown), in order to ensure that there is an adequate steam content at a sufficient temperature inside the housing 30 during the start-up phase, or also during operation of the apparatus, and in order to prevent too much ambient air and hence oxygen from entering the housing 30 as the empty containers 44 are carried in.

In operation, the cooked food product delivered via the lock 6 falls onto the delivery belt 46 and into the buffer 54, from where it passes into the filler and metering unit 56 and into a container 44 to be filled. After being filled, the container 44 is sealed by the lid sealer 58 and conveyed out of the housing 30.

The method of the invention contemplates that the food product is dried in the atmosphere of superheated steam to an a_{w} value of no more than 0.92, preferably reaching an a_{w} value of at least 0.90.

Instead of the food product's being delivered via the cooking apparatus 2, it may be contemplated that the food product is extruded directly onto the delivery belt 46 by means of an extruder (not shown), which leads into the housing 30 above the receiving end 48 of the delivery belt 46 and in which the food product is cooked at at least 100° C.

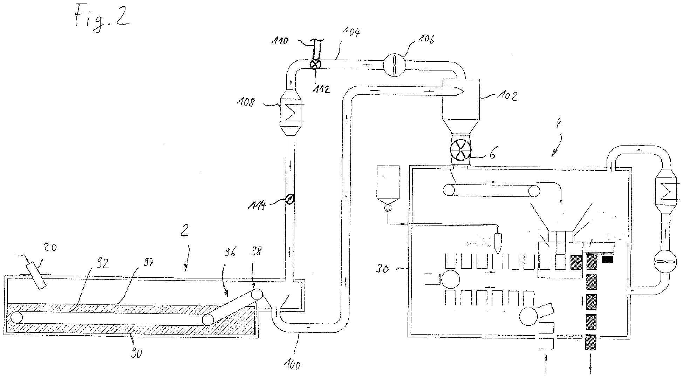

Fig. 2 shows a variant of the apparatus according to Fig. 1, in which two modifications are contained. The cooking apparatus 2 has a water bath 90, a conveyor belt 92 extending beneath a free surface 94 of the water bath 90, and food product supplied via a delivery means 20 being cooked in the water bath 90. A heating means for heating the water bath 90 is not shown.

Inside the cooking apparatus 2, there may be atmospheric pressure or an overpressure, so that the temperature of the water bath 90 is at least 100° C, such as 110° C or 120° C.

The conveying means 92 has a portion 96 leading upwards and out of the free surface 94 of the water bath 90, with a discharge end 98, from which the cooked food products enter a pneumatic conveyor line 100. The conveyor line 100 leads to a separator 102, e. g. a cyclone separator, which feeds the products into the lock 6. A return line 104, in which are disposed a fan 106 and a heat exchanger 108, runs from the separator 102 back to the cooking apparatus 2. In operation, the portion inside the cooking apparatus 2 above the free surface 94, the conveyor line 100, the separator 102 and the return line 104 are filled with steam, preferably with superheated steam or saturated steam at a temperature of at least 100° C and with an oxygen content of less than 3 %.

Surplus steam can be discharged via a branch line 110 and a branch valve 112. In quantity, the surplus steam corresponds to the amount of water withdrawn from the product to be dried. The branch valve 112 can be controlled by a pressure sensor 114. When the pressure sensor 114 detects a pressure above a predetermined value within the system comprising the cooking apparatus 2 and the conveyor lines 100, 104, the branch valve 112 is opened.

In both embodiments according to Figs. 1 and 2, the cooking apparatus 2 is connected to the drying and packaging apparatus 4 or its housing 30 in a gas-tight manner via the lock 6, so that no ambient air can penetrate inside the housing.

Inside the drying and packaging apparatus 4, the cooked food product is dried gently in an atmosphere of superheated steam and with oxygen substantially excluded, and is filled into a container immediately after drying, still inside the atmosphere of superheated steam, which container is hermetically sealed, likewise inside the atmosphere of superheated steam, either immediately after being filled or after the addition of a protective gas, essentially as described with reference to Fig. 1.

Inside the atmosphere of superheated steam, vegetative microorganisms, including vegetative bacteria, fungi and yeasts, are killed off completely. All microbial spoilage organisms and pathogenic microorganisms such as salmonellae are reliably killed.

Certain heat-resistant bacterial spores, e.g. those of Geobacillus thermophilus, are not completely eliminated. Germination of any spores that might survive is, however, prevented by the a_{w} values of no more than 0.92 in the product, such as 0.90. If the product is dried to an a_{w} value of 0.86, the growth of Staphylococcus aureus is also precluded.

### LIST OF REFERENCE NUMERALS

- 2: Cooking apparatus
- 4: Drying and packaging apparatus
- 6: Lock
- 8: Water supply
- 10: Free surface
- 12: Heating apparatus (steam line)
- 14: Direction of transport
- 16: Conveyor belt
- 18: Receiving end
- 20: Delivery means
- 22: Discharge end
- 24: Processing apparatus (cutting apparatus)
- 30: Housing
- 32: Top side
- 34: Opening
- 36: Underside
- 38: Entry port
- 40: Exit port
- 42: Container conveying means
- 44: Container
- 44a: Container opening
- 46: Delivery belt
- 48: Receiving end
- 50: Discharge end
- 52: Filling apparatus
- 54: Buffer
- 56: Filler/metering unit
- 58: Lid sealer
- 60: Container
- 62: Metering means
- 70: Conveying region
- 72: First redirecting means
- 74: Second redirecting means
- 80: Heat exchanger
- 82: Fan
- 84: Steam line
- 86: Outlet end
- 88: Inlet end
- 90: Water bath
- 92: Conveying means (conveyor belt)
- 94: Free surface
- 96: Portion leading out
- 98: Discharge end
- 100: Pneumatic conveyor line
- 102: Separator
- 104: Return line
- 106: Fan
- 108: Heat exchanger
- 110: Branch line
- 112: Branch valve
- 114: Pressure sensor

## Claims

1. Method of producing a packed food product, comprising:
- cooking a food product at a cooking temperature of at least 100°C,
- introducing the cooked food product into an atmosphere of superheated steam, the atmosphere of superheated steam containing less than 3% of oxygen and having a temperature of at least 120°C,
- drying the food product to an a_{w}-value in the range from 0.90 to 0.92,
- in the superheated steam atmosphere, packaging the food product in a packaging container and hermetically sealing the packaging container.

2. Method of claim 1, wherein the superheated steam atmosphere during drying is maintained at a temperature of at least 130°C.

3. Method of claim 1 or 2, wherein the food product is cooked in water, saturated steam or superheated steam.

4. Method of claim 1 or 2, wherein the food product is cooked in an extruder and is directly extruded into the atmosphere of superheated steam.

5. Method of claim 4, wherein the food product is dried during a drying time of at least 20 seconds, 30 seconds, 40 seconds, 1 minute, 2 minutes, 5 minutes or 10 minutes.

6. Method of any of the preceding claims, wherein the food product is pasteurized by drying during at least 2, 3, 4, 5 or 10 minutes, at a temperature of at least 60°C, 70°C, 75°C, 80°C, 85°C, 90°C or 95°C.

7. Method of any of the preceding claims, wherein the cooked and dried food product is packaged without addition of any preservative.

8. Method of any of the preceding claims, wherein a protective gas is fed into the packaging container.

9. Method of any of the preceding claims, wherein a moist food product is cooked, the food product having an initial moisture content in the range of 25% to 35% by weight.

10. Method of any of the preceding claims, wherein a temperature of the food product is maintained at 100°C or above between cooking the food product and sealing the packaging container.

11. Method of any of the preceding claims, wherein the food product is cooked while being extruded.

12. Method of any of the preceding claims, wherein the atmosphere of superheated steam is maintained at atmospheric pressure.

13. Food product packed in a packaging impermeable to O₂, obtainable by a method of any of the preceding claims, wherein the food product has an a_{w}-value in the range from 0.90 to 0.92.

14. Food product of claims 15 or 16, wherein the packaging contains a protective gas, in particular CO₂ or N₂.

15. Food product of any of claims 15 to 17, wherein an oxygen content in a gas space inside the packaging container is 3 % by vol. or less.

## Patentansprüche

1. Verfahren zur Herstellung eines verpackten Nahrungsmittelprodukts, umfassend:
- Kochen eines Nahrungsmittelprodukts bei einer Kochtemperatur von mindestens 100°C,
- Einführen des gekochten Nahrungsmittelprodukts in eine Atmosphäre von überhitztem Dampf, wobei die Atmosphäre von überhitztem Dampf weniger als 3 % Sauerstoff enthält und eine Temperatur von mindestens 120°C aufweist,
- Trocknen des Nahrungsmittelprodukts auf einen aw-Wert im Bereich von 0,90 bis 0,92,
- in der Heißdampfatmosphäre, Verpacken des Nahrungsmittelprodukts in einem Verpackungsbehälter und hermetisches Verschließen des Verpackungsbehälters.

2. Verfahren nach Anspruch 1, **dadurch gekennzeichnet, dass** die überhitzte Dampfatmosphäre während des Trocknens bei einer Temperatur von mindestens 130°C gehalten wird.

3. Verfahren nach Anspruch 1 order 2, **dadurch gekennzeichnet, dass** das Nahrungsmittelprodukt in Wasser, gesättigtem Dampf oder überhitztem Dampf gekocht wird.

4. Verfahren nach Anspruch 1 oder 2, **dadurch gekennzeichnet, dass** das Nahrungsmittelprodukt in einem Extruder gekocht und direkt in die Atmosphäre von gesättigtem Dampf extrudiert wird.

5. Verfahren nach Anspruch 4, **dadurch gekennzeichnet, dass** das Nahrungsmittelprodukt während einer Trocknungszeit von mindestens 20 Sekunden, 30 Sekunden, 40 Sekunden, 1 Minute, 2 Minuten, 5 Minuten oder 10 Minuten getrocknet wird.

6. Verfahren nach einem der vorhergehenden Ansprüche, **dadurch gekennzeichnet, dass** das Nahrungsmittelprodukt durch Trocknen während mindestens 2, 3, 4, 5 oder 10 Minuten bei einer Temperatur von mindestens 60°C, 70°C, 75°C, 80°C, 85°C, 90°C oder 95°C pasteurisiert wird.

7. Verfahren nach einem der vorhergehenden Ansprüche, **dadurch gekennzeichnet, dass** das gekochte und getrocknete Nahrungsmittelprodukt ohne Zusatz von Konservierungsmittel verpackt wird.

8. Verfahren nach einem der vorhergehenden Ansprüche, **dadurch gekennzeichnet, dass** ein Schutzgas dem Verpackungsbehälter zugeführt wird.

9. Verfahren nach einem der vorhergehenden Ansprüche, wobei ein feuchtes Nahrungsmittelprodukt gekocht wird, wobei das Nahrungsmittelprodukt einen anfänglichen Feuchtigkeitsgehalt im Bereich von 25 bis 35 Gew.-% aufweist.

10. Verfahren nach einem der vorhergehenden Ansprüche, bei dem eine Temperatur des Nahrungsmittelprodukts bei 100°C oder darüber zwischen dem Kochen des Nahrungsmittelprodukts und dem Verschließen des Verpackungsbehälters gehalten wird.

11. Verfahren nach einem der vorhergehenden Ansprüche, **dadurch gekennzeichnet, dass** das Nahrungsmittelprodukt gekocht wird, während es extrudiert wird.

12. Verfahren nach einem der vorhergehenden Ansprüche, wobei die Atmosphäre des überhitzten Dampfes bei Atmosphärendruck gehalten wird.

13. Nahrungsmittelprodukt, verpackt in einer für O₂ undurchlässigen Verpackung, erhältlich durch ein Verfahren nach einem der vorhergehenden Ansprüche, wobei das Nahrungsmittelprodukt einen aw-Wert im Bereich von 0,90 bis 0,92 aufweist.

14. Nahrungsmittel nach Anspruch 13, **dadurch gekennzeichnet, dass** die Verpackung ein Schutzgas, insbesondere CO₂ oder N₂ enthält.

15. Nahrungsmittelprodukt nach einem der Ansprüche 13 oder 14, wobei ein Sauerstoffgehalt in einem Gasraum innerhalb des Verpackungsbehälters 3 Vol.-% oder weniger beträgt.

## Revendications

1. Procédé de production d'un produit alimentaire emballé, consistant à :
- cuire un produit alimentaire à une température de cuisson d'au moins 100°C,
- introduire le produit alimentaire cuit dans une atmosphère de vapeur surchauffée, l'atmosphère de vapeur surchauffée contenant moins de 3 % d'oxygène et ayant une température d'au moins 120 °C,
- sécher le produit alimentaire jusqu'à une valeur a_{w} dans la plage comprise entre 0,90 et 0,92,
- dans l'atmosphère de vapeur surchauffée, emballer le produit alimentaire dans un récipient d'emballage et sceller hermétiquement le récipient d'emballage.

2. Procédé selon la revendication 1, dans lequel l'atmosphère de vapeur surchauffée durant le séchage est maintenue à une température d'au moins 130 °C.

3. Procédé selon la revendication 1 ou 2, dans lequel le produit alimentaire est cuit dans l'eau, dans de la vapeur saturée ou de la vapeur surchauffée.

4. Procédé selon la revendication 1 ou 2, dans lequel le produit alimentaire est cuit dans une extrudeuse et est directement extrudé dans l'atmosphère de vapeur surchauffée.

5. Procédé selon la revendication 4, dans lequel le produit alimentaire est séché pendant un temps de séchage d'au moins 20 secondes, 30 secondes, 40 secondes, 1 minute, 2 minutes, 5 minutes ou 10 minutes.

6. Procédé selon l'une quelconque des revendications précédentes, dans lequel le produit alimentaire est pasteurisé par séchage pendant au moins 2, 3, 4, 5 ou 10 minutes, à une température d'au moins 60, 70, 75, 80, 85, 90 ou 95°C.

7. Procédé selon l'une quelconque des revendications précédentes, dans lequel le produit alimentaire cuit et séché est emballé sans addition d'aucun conservateur.

8. Procédé selon l'une quelconque des revendications précédentes, dans lequel un gaz de protection est alimenté dans le récipient d'emballage.

9. Procédé selon l'une quelconque des revendications précédentes, dans lequel un produit alimentaire humide est cuit, le produit alimentaire ayant une teneur en humidité initiale dans la page comprise entre 25 et 35 % en poids.

10. Procédé selon l'une quelconque des revendications précédentes, dans lequel une température du produit alimentaire est maintenue à 100 °C ou plus entre la cuisson du produit alimentaire et le scellement du récipient d'emballage.

11. Procédé selon l'une quelconque des revendications précédentes, dans lequel le produit alimentaire est cuit tandis qu'il est extrudé.

12. Procédé selon l'une quelconque des revendications précédentes, dans lequel l'atmosphère de vapeur surchauffée est maintenue à une pression atmosphérique.

13. Produit alimentaire emballé dans un emballage imperméable à l'O₂, pouvant être obtenu par un procédé selon l'une quelconque des revendications précédentes, dans lequel le produit alimentaire a une valeur a_{w} dans la plage comprise entre 0,90 et 0,92.

14. Produit alimentaire selon les revendications 15 ou 16, dans lequel l'emballage contient un gaz de protection, en particulier du CO₂ ou du N₂.

15. Produit alimentaire selon l'une quelconque des revendications 15 à 17, dans lequel une teneur en oxygène dans un espace gazeux à l'intérieur du récipient d'emballage est de 3 % en volume, ou moins.
